# EUROPEAN PATENT APPLICATION

(11) **EP 4 613 385 A1**
(43) Date of publication of application: **10.09.2025**
(21) Application number: 25159848.8
(22) Date of filing: 25.02.2025
(51) Int. Cl.: B05C 1/08, H01M 4/04

(54) **COATING DEVICE**

(30) Priority: 29.02.2024 CN 202420391646 U
(71) Applicant: Xiamen Hithium Energy Storage Technology Co., Ltd., Xiamen, Fujian 361100 (CN)
(72) Inventor: LIU, Yang, Xiamen, Fujian, 361100 (CN); WANG, Hao, Xiamen, Fujian, 361100 (CN)
(74) Representative: Manitz Finsterwald Patent- und Rechtsanwaltspartnerschaft mbB

(57) **Abstract**

The present disclosure discloses a coating device. The coating device includes a coating roller, a scraping roller, and a blocking assembly. The scraping roller and the coating roller are arranged side by side, and a gap is provided between the scraping roller and the coating roller to allow a slurry to pass through. The blocking assembly is arranged at an outer side of the coating roller and an outer side of the scraping roller. The blocking assembly includes a support and a blocker mounted at the support. The blocker includes a cooperation portion cooperating with the coating roller and an engagement portion cooperating with the scraping roller. A first end of the cooperation portion and a first end of the engagement portion are connected and form an angle portion. The angle portion extends into the gap. A second end of the cooperation portion is located away from a second end of the engagement portion to form a first angle between the cooperation portion and the engagement portion. The first angle is adjustable.

## Description

### FIELD

The present disclosure relates to the field of coating technologies, and particularly, to a coating device.

### BACKGROUND

The coating device is mainly used for production of a surface coating process of metallic foil, film, etc., generally adopts a special multifunctional coating device head, and can realize various forms of surface coating process. rolled substrates, such as metallic foil, film, cloth, paper, etc., are coated with a layer of ingredients with specific functions, and then wind it up after drying. Due to a high degree of automation, the coating device is widely used in coating production.

The most important and critical processes in the battery industry are slurry mixing, coating, and liquid injection, and the coating is the top priority, which is a technical focus of the entire industry. Quality of the coating directly affects safety and quality of a product. Currently, most battery coatings adopt coating devices, which include coating rollers and scraping rollers. During a coating process, a slurry is prone to spread outwards as the coating roller rotates, which affects a coating effect and also causes slurry waste.

### SUMMARY

In view of the above problems, the present disclosure provides a coating device, capable of solving a problem in which a slurry is prone to spread outwards, which affects a coating effect and also causes slurry waste.

In a first aspect, the present disclosure provides a coating device. The device includes a coating roller, a scraping roller, and a blocking assembly. The scraping roller and the coating roller are arranged side by side, and a gap is provided between the scraping roller and the coating roller to allow a slurry to pass through. The blocking assembly is arranged at an outer side of the coating roller and an outer side of the scraping roller. The blocking assembly includes a support and a blocker mounted at the support. The blocker includes a cooperation portion cooperating with the coating roller and an engagement portion cooperating with the scraping roller. A first end of the cooperation portion and a first end of the engagement portion are connected with each other and form an angle portion, and the angle portion extends into the gap. A second end of the cooperation portion is located away from a second end of the engagement portion to form a first angle between the cooperation portion and the engagement portion, and the first angle is adjustable.

In the coating device of the above technical solution, by extending the angle portion of the blocker into the gap formed by the scraping roller and the coating roller, during a coating process, the slurry spreading outwards caused by the rotation of the coating roller can be blocked by the angle portion and fall into a slurry tank, which can ensure the coating effect on the one hand and avoid the slurry waste on the other hand. At the same time, since the first angle between the cooperation portion and the engagement portion is adjustable, the angle portion can extend into the gap to fill the gap and block the slurry from spreading outwards, no matter what reason for the change in the gap between the scraping roller and the coating roller. That is, the blocking assembly can constantly block the slurry from spreading outwards, and therefore the coating effect can be guaranteed when the gap changes.

As an optional technical solution of the present disclosure, the blocker further includes a first adjustment portion. Two opposite ends of the first adjustment portion being connected to the cooperation portion and the engagement portion, respectively, and the first adjustment portion is configured, by means of multi-stage extension and retraction, adjust the first angle according to a size of the gap.

In the above technical solution, the blocker adjusts the first angle through using the first adjustment portion, ensuring that when the size of the gap between the scraping roller and the coating roller changes, the angle portion may extend into the gap to fill the gap and prevent the slurry from spreading outwards.

As an optional technical solution of the present disclosure, the support includes a first support portion and a second support portion. The first support portion is connected to the engagement portion at a first end of the first support portion. The second support portion is connected to the cooperation portion at a first end of the second support portion. A second end of the first support portion and a second end of the second support portion are connected with each other and have a second angle. The second angle is adjustable to change the first angle.

In the above technical solution, the first support portion is connected to the engagement portion, and the second support portion is connected to the cooperation portion. The second angle between the first support portion and the second support portion that are connected to each other may be adjusted, enabling the first angle to be changed. Likewise, this arrangement can also ensure that when the size of the gap between the scraping roller and the coating roller changes, the angle portion may extend into the gap to fill the gap and prevent the slurry from spreading outwards.

As an optional technical solution of the present disclosure, the support further includes a second adjustment portion. Two opposite ends of the second adjustment portion are connected to the first support portion and the second support portion, respectively. The second adjustment portion is configured, by means of multi-stage extension and retraction, adjust the second angle according to the size of the gap, to change the first angle between the cooperation portion and the engagement portion.

In the above technical solution, the support adjusts the second angle through using the second adjustment portion, thereby achieving an adjustment of the first angle. Therefore, it is ensured that when the size of the gap between the scraping roller and the coating roller changes, the angle portion may still extend into the gap to fill the gap and prevent the slurry from spreading outwards.

As an optional technical solution of the present disclosure, the first adjustment portion or the second adjustment portion includes a housing, an elastic portion penetrating the housing, and at least two limit portions mounted at the housing in an extendable and retractable manner. The at least two limit portions are sequentially arranged in a length direction of the elastic portion, and the at least two limit portions are configured to selectively extend to a deformation path of the elastic portion relative to the housing or retract to be located outside the deformation path of the elastic portion relative to the housing, to match the first angle with the gap.

In the above technical solution, the first adjustment portion or the second adjustment portion adopts the multi-stage elastic retractable structure in such a manner that the first angle is adjusted through using the elastic portion, and the first angle is held to match the gap using the limit portion. In this way, a relatively simple structure can be used to adjust the first angle.

As an optional technical solution of the present disclosure, the first adjustment portion or the second adjustment portion includes a stator and a mover. The mover is extendable and retractable relative to the stator to adjust the first angle to match the gap.

In the above technical solution, the first adjustment portion or the second adjustment portion adopts the multi-stage rigid retractable structure in such a manner that the second angle is adjusted by using the extension and the retraction of the mover relative to the stator, thereby adjusting the first angle, such that the first angle to matches the size of the gap and hold the first angle to match the gap. In this way, a relatively simple structure can be used to adjust the first angle.

As an optional technical solution of the present disclosure, the cooperation portion has a first surface and a second surface opposite to the first surface of the cooperation portion, the first surface of the cooperation portion being an arc surface in contact with and in cooperation with the coating roller; and the engagement portion has a first surface and a second surface opposite to the first surface of the engagement portion, the first surface of the engagement portion being an arc surface in contact with and in cooperation with the scraping roller.

In the above technical solution, since the first surface of the cooperation portion is the arc surface; the first surface of the engagement portion is the arc surface; a peripheral surface of the coating roller is an arc surface; and a peripheral surface of the scraping roller is an arc surface, the cooperation portion and the coating roller can be seamlessly fitted, and the engagement portion and the scraping roller can also be seamlessly fitted. In this way, the slurry is avoided from entering a position between the cooperation portion and the coating roller or a position between the engagement portion and the scraping roller, which would otherwise result in the waste and affect the coating effect.

As an optional technical solution of the present disclosure, the blocker further includes a connection portion extending from the second surface of the cooperation portion; the connection portion and the engagement portion are located at a side of the cooperation portion where the second surface of the cooperation portion is located; the connection portion is configured to connect to an external structure; the cooperation portion, the engagement portion, and the connection portion together form an engagement groove; and the support is disposed in the engagement groove.

In the above technical solution, the arrangement of the connection portion can facilitate a fixed mounting of the entire blocker, and the engagement groove formed by the cooperation portion, the engagement portion, and the connection portion can provide a satisfactory mounting of the support.

As an optional technical solution of the present disclosure, the coating device further includes a loader connected to the connection portion.

In the above technical solution, the mounting of the blocking assembly is achieved by the loader connected to the connection portion. In this way, the mounting is simple and convenient.

As an optional technical solution of the present disclosure, the coating device further includes a clamping plate configured to fixedly clamp the support and the connection portion to the loader.

In the above technical solution, the arrangement of the clamping plate can firmly and fixedly clamp the support and the loader without a movement. Therefore, the angle portion of the blocker can cooperate well with the coating roller and the scraping roller. Thus, the effect of blocking the overflowing of the slurry is improved.

As an optional technical solution of the present disclosure, the blocker is an ethylene-vinyl acetate copolymer, EVA, foam board, an acrylic board, a plastic board, or a metallic board.

In the above technical solution, when the blocker is the EVA foam board, the angle portion of the blocker may extend into the gap to be in good cooperation with the scraping roller and the coating roller, which can not only block the overflowing of the slurry but also provide a sound insulation effect. Additionally, the slurry can be prevented from leaking and seeping into a space between the foam and the coating roller, which causes the formation of particle agglomerations and dark marks on the film surface. That is, the issue of dark marks caused by the slurry seepage can also be improved.

As an optional technical solution of the present disclosure, the coating device further includes: a first support frame and a first connector, the scraping roller being rotatably connected to the first support frame through the first connector; and a second support frame and a second connector, the coating roller being rotatably connected to the second support frame through the second connector.

In the above technical solution, the first support frame and the first connector jointly realize the mounting and the fixing of the scraping roller, and the second support frame and the second connector jointly realize the mounting and the fixing of the coating roller. As a result, the scraping roller and the coating roller can be arranged side by side.

The above description is only an overview of the technical solutions of the present disclosure. In order to have a clearer understanding of the technical means of the present disclosure, the technical solutions can be implemented in accordance with the contents of the specification. Moreover, in order to make the above and other purposes, features and advantages of the present disclosure more obvious and easy to understand, specific embodiments of the present disclosure are given below.

### BRIEF DESCRIPTION OF THE DRAWINGS

Various other advantages and benefits will become apparent to those skilled in the art after reading the detailed description of preferred embodiments given below. The accompanying drawings are used for a purpose of illustrating the preferred embodiments only, rather than limiting the present disclosure. Moreover, throughout the accompanying drawings, same elements are denoted by same reference numerals.
FIG. 1 is a schematic structural plan view of a coating device according to some embodiment of the present disclosure.
FIG. 2 is another schematic structural plan view of a coating device according to some embodiments of the present disclosure.
FIG. 3 is yet another schematic structural plan view of a coating device according to some embodiments of the present disclosure.
FIG. 4 is a schematic structural view of a blocker of a blocking assembly in a coating device according to some embodiments of the present disclosure.
FIG. 5 is a schematic structural view of a blocker and a first adjustment portion of a coating device according to some embodiments of the present disclosure.
FIG. 6 is a schematic structural view of a blocker and another first adjustment portion of a coating device according to some embodiments of the present disclosure.
FIG. 7 is a schematic structural view of a blocker and a second adjustment portion of a coating device according to some embodiments of the present disclosure.
FIG. 8 is a schematic structural view of a blocker and another second adjustment portion of a coating device according to some embodiments of the present disclosure.

Reference numerals in specific embodiments are as follows:
coating device 100;
coating roller 10, scraping roller 30, gap 40, center line M, blocking assembly 50;
support 51, first support portion 511, first end 5111 of first support portion, second end 5113 of first support portion, second support portion 513, first end 5131 of second support portion, second end 5133 of second support portion, second adjustment portion 515, second housing 5151, second elastic portion 5153, second limit portion 5155, second stator 5157, second mover 5159;
blocker 53, cooperation portion 531, first end 5311 of cooperation portion, second end 5313 of cooperation portion, first surface 5315 of cooperation portion, second surface 5317 of cooperation portion, engagement portion 533, first end 5331 of engagement portion, the second end 5333 of engagement portion, first surface 5335 of engagement portion, second surface 5337 of engagement portion, angle portion 535, first adjustment portion 537, first housing 5371, first elastic portion 5373, first limit portion 5375, first stator 5377, first mover 5379, first angle α, second angle β, connection portion 539, engagement groove 530;
loader 55;
clamping plate 57, first clamping arm 571, second clamping arm 573, connection arm 575;
first support frame 61, first connector 71, second support frame 63, second connector 73.

### DETAILED DESCRIPTION

Embodiments of technical solutions of the present disclosure will be described in detail below with reference to the accompanying drawings. The following embodiments are only used to more clearly illustrate the technical solutions of the present disclosure, and therefore are only used as examples, and cannot be used to limit the protection scope of the present disclosure.

Unless otherwise defined, all technical and scientific terms used herein have the same meaning as commonly understood by those skilled in the art of the present disclosure. Terms in the specification of the present disclosure herein are only used for the purpose of describing exemplary embodiments, and are not intended to limit the present disclosure. Terms "including" and "having" and any variants thereof as used in the description of the embodiments of the present disclosure, the appended claims, and the above accompanying drawings are intended to cover non-exclusive inclusions.

In the description of the present disclosure, terms such as "first" and "second" are used herein for purposes of description and are not intended to indicate or imply relative importance, or to implicitly show the number of technical features, specific orders, or primary and secondary relationships indicated. In the description of the present disclosure, "a plurality of" means two or more, unless otherwise specifically defined.

Reference herein to "an embodiment" means that a particular feature, structure or characteristic described in combination with the embodiment can be included in at least one embodiment of the present disclosure. The appearance of this phrase in various places in the specification are not necessarily all referring to the same embodiment, nor is it an independent or alternative embodiment that is mutually exclusive of other embodiments. Those skilled in the art understand, both explicitly and implicitly, that the embodiments described herein may be combined with other embodiments.

In the description of the present disclosure, "and/or" describes an association relationship between correlated objects, including three relationships. For example, "A and/or B" can mean A only, B only, or both A and B. In addition, the symbol "/" generally indicates an "or" relationship between the correlated objects preceding and succeeding the symbol.

In the description of the present disclosure, the term "a plurality of" refers to more than two (including two). Similarly, "a plurality of groups" refers to more than two groups (including two groups), and "a plurality of pieces" refers to more than two pieces (including two pieces).

In the description of the present disclosure, it is to be understood that, terms such as "center," "longitudinal," "lateral," "length," "width," "thickness," "over," "below," "front," "back," "left," "right," "vertical," "horizontal," "top," "bottom," "in," "out," "clockwise," "counterclockwise," "axial," "radial," "circumferential," etc., is based on the orientation or position relationship shown in the accompany drawings, and is only for the convenience of describing the present disclosure and simplifying the description, rather than indicating or implying that the associated device or element must have a specific orientation, or be constructed and operated in a specific orientation, and therefore cannot be understood as a limitation on the present disclosure.

In the description of the present disclosure, unless specified or limited otherwise, the terms "mounted," "connected," "coupled" and "fixed" are understood broadly, such as fixed, detachable mountings, connections and couplings or integrated, and can be mechanical or electrical mountings, connections and couplings, and also can be direct and via media indirect mountings, connections, and couplings, and further can be inner mountings, connections and couplings of two components or interaction relations between two components.

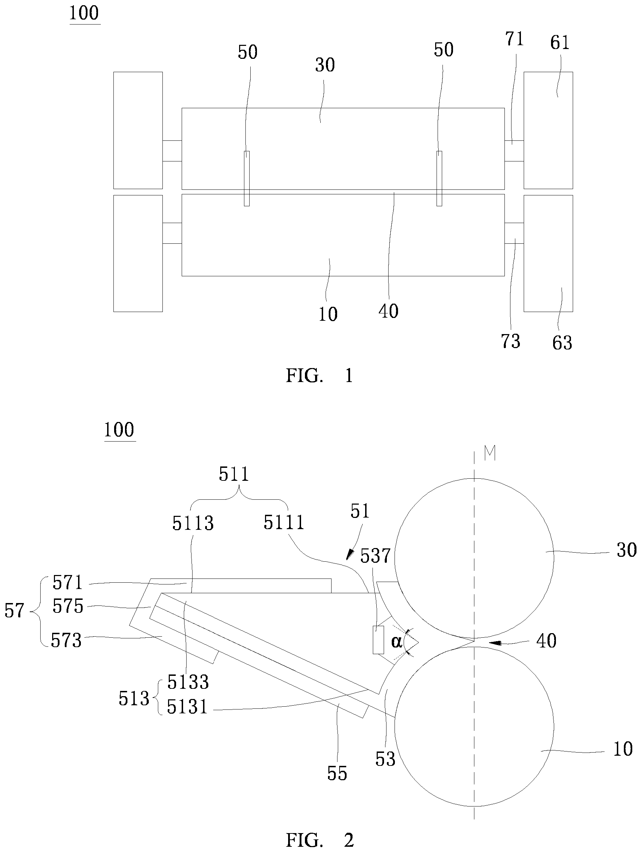

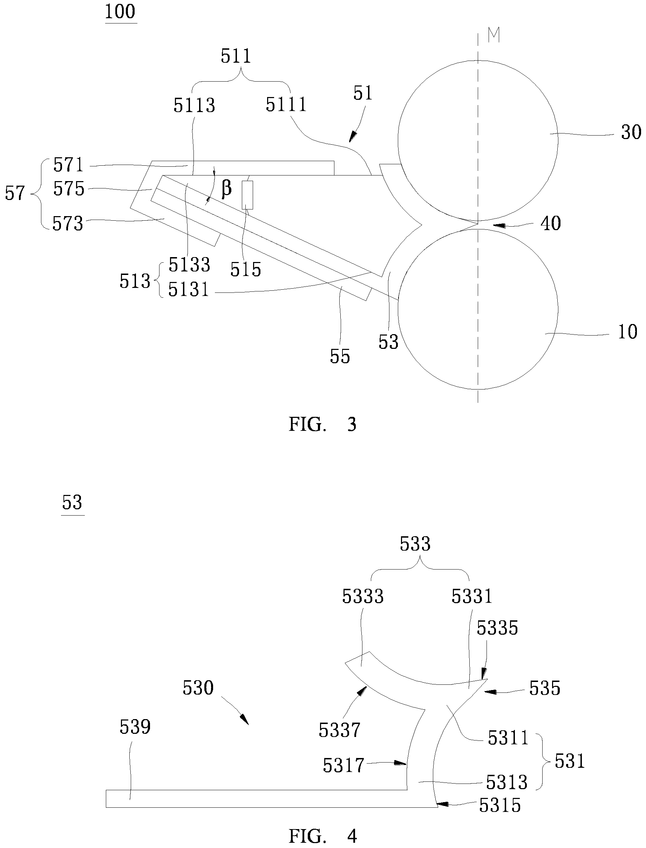

Referring to FIGS. 1 and 2, the present disclosure provides a coating device 100. The coating device 100 includes a coating roller 10, a scraping roller 30, and a blocking assembly 50. The scraping roller 30 and the coating roller 10 are arranged side by side, and a gap 40 is provided between the scraping roller 30 and the coating roller 10 to allow a slurry to pass through. The blocking assembly 50 is arranged at an outer side of the coating roller 10 and an outer side of the scraping roller 30. The blocking assembly 50 includes a support 51 and a blocker 53 mounted at the support 51. Referring to FIG. 4, the blocker 53 includes a cooperation portion 531 cooperating with the coating roller 10 and an engagement portion 533 cooperating with the scraping roller 30. A first end 5311 of the cooperation portion 531 and a first end 5331 of the engagement portion 533 are connected with each other and form an angle portion 535. A second end 5313 of the cooperation portion 531 is located away from a second end 5333 of the engagement portion 533 with each other to form a first angle α between the cooperation portion 531 and the engagement portion 533. The angle portion 535 extends into the gap 40. The first angle α between the cooperation portion 531 and the engagement portion 533 is adjustable.

The coating device 100 is a device for coating rolled substrates, such as metallic foil, film, cloth, paper, etc., with a layer of ingredients with specific functions, and then drying and rewinding. In some embodiments of the present disclosure, the coating device 100 is a device for coating a rolled metallic foil with a slurry to form a coating region of an electrode sheet. It should be noted that in other embodiments, the coating device 100 may also be a device for coating other ingredients with specific functions onto a substrate to form other elements.

The coating roller 10 is a rotatable roller for winding a substrate (such as metallic foil). The coating roller 10 has two end surfaces and a circumferential surface connected to the two end surfaces. Typically, the coating roller 10 is in a cylindrical structure with two circular end surfaces and a peripheral surface that is a circumferential surface. The scraping roller 30 is a roller for extruding a slurry when the slurry is applied onto a substrate to achieve a required thickness of the slurry. The scraping roller 30 also has two end surfaces and a peripheral surface connected to each of the two end surfaces. In some embodiments, the scraping roller 30 is in a cylindrical structure with two circular end surfaces and a peripheral surface that is a circumferential surface, as shown in FIG. 2 or FIG. 3. In some other embodiments, the scraping roller 30 is not in a cylindrical structure with two non-circular end surfaces, but a comma roller having a "comma" portion. That is, the end surface of the scraping roller 30 is in a "comma" shape. In this case, an extrusion force of the scraping roller 30 is more concentrated on the "comma" portion, resulting in more precise coating and a better effect.

The scraping roller 30 and the coating roller 10 are arranged side by side. In one embodiment, the scraping roller 30 and the coating roller 10 are arranged side by side in a direction of center line M of end surfaces at a side of the scraping roller 30 and the coating roller 10. For example, the scraping roller 30 and the coating roller 10 are arranged side by side up and down as shown in FIG. 2 or FIG. 3. A gap 40 is provided between the scraping roller 30 and the coating roller 10 to allow the slurry to pass through, that is, the gap 40 is formed by the peripheral surface of the scraping roller 30 and the peripheral surface of the coating roller 10 and is typically the required thickness of the formed coating region. When the slurry is coated through the gap 40 between the scraping roller 30 and the coating roller 10, the scraping roller 30 scrapes off an excess slurry, and the excess slurry scraped off flows back into the slurry tank.

The blocking assembly 50 is an assembly for preventing the slurry from overflowing. In the present disclosure, two slurry blocking assemblies 50 are provided. The two slurry blocking assemblies 50 are arranged at two ends of a substrate in a width direction of the substrate and configured to prevent the slurry from overflowing from an edge of the substrate in the width direction of the substrate. The blocking assembly 50 includes a support 51 and a blocker 53 mounted at the support 51. The blocker 53 is specifically configured to prevent the slurry from overflowing, and the support 51 is configured to support the blocker 53.

In some embodiments, the blocker 53 is an EVA foam board, an acrylic board, a plastic board, or a metallic board. The EVA foam board has good softness and elasticity, may still have good flexibility at a temperature of -50°C, good chemical stability, good aging resistance and ozone resistance, and is harmless. Therefore, when the blocker 53 is the EVA foam board, the angle portion 535 of the blocker 53 may extend into the gap 40 to be in good cooperation with the scraping roller 30 and the coating roller 10, which can not only block the overflowing of the slurry but also provide a sound insulation effect. Additionally, the slurry can be prevented from leaking out and seeping into a space between the blocker 53 (the EVA foam board) and the coating roller 10, which causes the formation of particle agglomerations and dark marks on the film surface. That is, the issue of dark marks caused by the slurry seepage can also be improved.

In addition, the EVA foam board may be formed through stamping, injection molding, extrusion molding, blow molding, calendering, rotational vacuum thermoforming, foaming, coating, heat sealing, welding, and other molding processes. Using a standard EVA foam board after stamping can ensure neat trimming of the EVA foam board, thereby ensuring that the neat trimming of the EVA foam board is consistent with a side edge of the coating layer. Moreover, a tip part of the angle portion 535 is adjusted from a previous rounded corner to a suitable sharp corner, which can avoid an uneven grinding surface caused by the scraping roller 30 grinding the EVA foam board and causing the dark marks.

Referring to FIGS. 2 and 4, or FIGS. 3 and 4, the blocker 53 includes a cooperation portion 531 and an engagement portion 533 connected to the cooperation portion 531 of the blocker 53. The cooperation portion 531 cooperates with the coating roller 10, and the engagement portion 533 cooperates with the scraping roller 30. The cooperation portion 531 is in a curved structure and has a first end 5311 and a second end 5313 that are opposite to each other. The cooperation portion 531 is also a curved structure and also has a first end 5331 and a second end 5333 that are opposite to each other. A first end 5311 of the cooperation portion 531 is connected to a first end 5331 of the engagement portion 533, and a second end 5313 of the cooperation portion 531 is located away from a second end 5333 of the engagement portion 533, such that the cooperation portion 531 and the engagement portion 533 together form a "chevron" structure that has an angle portion 535 with a triangular or trapezoidal cross section at a connection end of the cooperation portion 531 and the engagement portion 533. A first angle α between the cooperation portion 531 and the engagement portion 533. The first angle α is an angle between two intersecting surfaces of the cooperation portion 531 and the engagement portion. When the two intersecting surfaces are arc surfaces, the first angle α is an angle between tangents of the two arc surfaces passing through an intersection point (an intersection point of the arc surfaces), as shown in FIG. 2. The angle portion 535 extends into the gap 40, and the first angle α between the cooperation portion 531 and the engagement portion 533 is adjustable, that is, the first angle α is variable, for example, from 70° to 65°, 60°, 55°, 50°, 45°, 40°, or 30°, etc., which will not be enumerated herein.

In one embodiment, the cooperation portion 531 includes a first surface 5315 and a second surface 5317 opposite to the first surface 5315, and the first surface 5315 of the cooperation portion 531 is an arc surface in contact with and in cooperation with the coating roller 10. The engagement portion 533 also includes a first surface 5335 and a second surface 5337 opposite to the first surface 5335, and the first surface 5335 of the engagement portion 533 is an arc surface in contact with and in cooperation with the scraping roller 30. Since the first surface 5315 of the cooperation portion 531 is an arc surface, and the peripheral surface of the coating roller 10 is a circumferential surface that is also an arc surface, the cooperation portion 531 and the coating roller 10 may fit well together. In this way, during the coating process, rotation of the coating roller 10 is not hindered by the cooperation portion 531. At the same time, the cooperation portion 531 can better wrap the peripheral surface of the coating roller 10 to achieve seamless fitting, thereby avoiding the slurry from entering a position between the cooperation portion 531 and the coating roller 10, which would otherwise result in the waste and affect the coating effect. Similarly, since the first surface 5335 of the engagement portion 533 is an arc surface, and the peripheral surface of the scraping roller 30 is a circular surface that is also an arc surface, the engagement portion 533 and the scraping roller 30 may fit well together. In this way, during the coating process, rotation of the scraping roller 30 is not hindered by the engagement portion 533. At the same time, the engagement portion 533 can better wrap the circumferential surface of the scraping roller 30 to achieve seamless fitting, thereby avoiding the slurry from entering a position between the engagement portion 533 and the scraping roller 30, which would otherwise result in the waste and affect the coating effect.

In the coating device 100 of the above-mentioned technical solution, by extending the angle portion 535 of the blocker 53 into the gap 40 formed by the scraping roller 30 and the coating roller 10, during the coating process, the slurry spreading outwards caused by the rotation of the coating roller 10 can be blocked by the angle portion 535 and fall into the slurry tank, which can ensure the coating effect on the one hand and avoid the slurry waste on the other hand. At the same time, since the first angle α between the cooperation portion 531 and the engagement portion 533 is adjustable, the angle portion 535 can extend into the gap 40 to fill the gap 40 and block the slurry from spreading outwards, no matter what reason for the change in the size of the gap 40 between the scraping roller 30 and the coating roller 10. That is, the blocking assembly 50 can constantly block the slurry from spreading outwards, and therefore the coating effect can be guaranteed when the gap 40 changes.

Further, referring to FIGS. 2 and 4, the blocker 53 may further include a first adjustment portion 537 with a multi-stage retractable structure. Two opposite ends of the first adjustment portion 537 are connected to the cooperation portion 531 and the engagement portion 533, respectively. The first adjustment portion 537 is configured, by means of multi-stage extension and retraction, adjust the first angle α between the cooperation portion 531 and the engagement portion 533 according to the size of the gap 40, such that the first angle α matches the gap 40.

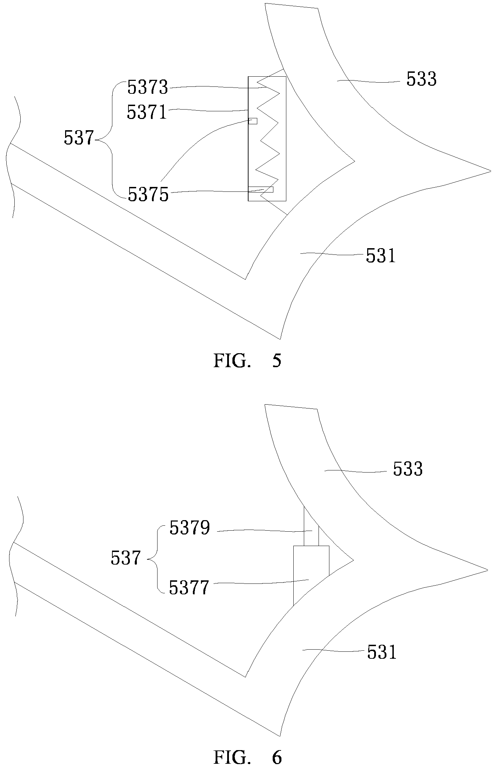

Referring to FIG. 5, in some embodiments, the first adjustment portion 537 may be of a multi-stage retractable structure that is elastically deformable (hereinafter referred to as a multi-stage elastic retractable structure), and the first adjustment portion 537 has an end connected to the cooperation portion 531 and another end connected to the engagement portion 533. In one embodiment, the first adjustment portion 537 (the multi-stage elastic retractable structure) includes a first housing 5371, a first elastic portion 5373 penetrating the first housing 5371, and at least two first limit portions 5375 mounted at the first housing 5371 in an extendable and retractable manner. Two opposite ends of the first elastic portion 5373 are connected to the cooperation portion 531 and the engagement portion 533, respectively, to apply a stretching force or a tensioning force to the cooperation portion 531 and/or the engagement portion 533, thereby stretching or tensioning the cooperation portion 531 and/or the engagement portion 533. The at least two first limit portions 5375 are sequentially arranged in a length direction of the first elastic portion 5373 and configured to selectively extend to a deformation path of the first elastic portion 5373 relative to the first housing 5371 or retract to be located outside the deformation path of the first elastic portion 5373 relative to the first housing 5371, such that the first angle matches the size of the gap 40 when a magnitude of the stretching force or a magnitude of the tensioning force of the first elastic portion 5373 changes. That is, the angle portion 535 can constantly be filled into the gap 40 between the scraping roller 30 and the coating roller 10 to prevent the slurry from overflowing. That is, the first surface 5315 of the cooperation portion 531 constantly maintains a good fit with the peripheral surface of the coating roller 10, and the first surface 5335 of the engagement portion 533 constantly maintains a good fit with the peripheral surface of the scraping roller 30. When the external force applied to the cooperation portion 531 and/or the engagement portion 533 changes, the change in the external force is transmitted to the first adjustment portion 537. In this case, the stretching force or the tensioning force of the first elastic portion 5373 of the first adjustment portion 537 changes, and the first limit portion 5375 initially cooperating with the first elastic portion 5373 retracts due to the external force and is located outside the deformation path of the first elastic portion 5373. The first elastic portion 5373 deforms to adjust the first angle α to enable that the first angle α matches the size of the gap 40. Another first limit portion 5375 of the first adjustment portion 537 may automatically extend to the deformation path of the first elastic portion 5373 relative to the first housing 5371 to hold the cooperation portion 531 and the engagement portion 533 at a position where the first angle α matches the size of the gap 40. For example, when the gap 40 between the scraping roller 30 and the coating roller 10 increases, the external force applied to the cooperation portion 531 and/or the engagement portion 533 decreases. In this case, the stretching force of the first adjustment portion 537 increases or the tensioning force of the first adjustment portion 537 decreases, and the first limit portion 5375 initially cooperating with the first elastic portion 5373 retracts due to the external force and is located outside the deformation path of the first elastic portion 5373. The first elastic portion 5373 of the multi-stage elastic retractable structure extends, and the first angle α between the cooperation portion 531 and the engagement portion 533 increases and rematches the increased gap 40. In this way, the angle portion 535 can still be filled into the gap 40 between the scraping roller 30 and the coating roller 10 to prevent the slurry from overflowing. For another example, when the gap 40 between the scraping roller 30 and the coating roller 10 decreases, the external force applied to the cooperation portion 531 and/or the engagement portion 533 increases. In this case, the stretching force of the first adjustment portion 537 decreases or the tensioning force of the first adjustment portion 537 increases, and the first limit portion 5375 initially cooperating with the first elastic portion 5373 retracts due to the external force and is located outside the deformation path of the first elastic portion 5373. The first elastic portion 5373 of the multi-stage elastic retractable structure retracts, and the first angle α between the cooperation portion 531 and the engagement portion 533 decreases and rematches the decreased gap 40. In this way, the angle portion 535 may still be filled into the gap 40 between the scraping roller 30 and the coating roller 10 to prevent the slurry from overflowing.

Referring to FIG. 6, in other embodiments, the first adjustment portion 537 may be of a multi-stage retractable structure without elastic deformation (hereinafter referred to as a multi-stage rigid retractable structure), such as a multi-stage cylinder retractable structure, a multi-stage hydraulic cylinder retractable structure, or a multi-stage linear retractable motor. The first adjustment portion 537 has an end connected to the cooperation portion 531 and another end connected to the engagement portion 533. The first adjustment portion 537 (the multi-stage rigid retractable structure) includes a first stator 5377 and a first mover 5379. One of the first stator 5377 and the first mover 5379 is connected to the cooperation portion 531, and another one of the first stator 5377 and the first mover 5379 is connected to the engagement portion 533. The first mover 5379 is retractable relative to the first stator 5377 to stretch the cooperation portion 531 and the engagement portion 533. When the external force applied on the cooperation portion 531 and/or the engagement portion 533 changes, the first adjustment portion 537 can automatically adjust a degree of the stretching between the cooperation portion 531 and the engagement portion 533 in response to the change of the external force, to adjust the first angle α between the cooperation portion 531 and the engagement portion 533 and hold the cooperation portion 531 and the engagement portion 533 at a position where the first angle constantly matches the size of the gap 40. For example, when the gap 40 between the scraping roller 30 and the coating roller 10 increases, the external force applied to the cooperation portion 531 and/or the engagement portion 533 decreases. In this case, the first mover 5379 extends relative to the first stator 5377 to increase the first angle α and rematch the increased gap 40. In this way, the angle portion 535 may still be filled into the gap 40 between the scraping roller 30 and the coating roller 10 to prevent the slurry from overflowing. For another example, when the gap 40 between the scraping roller 30 and the coating roller 10 decreases, the external force applied to the cooperation portion 531 and/or the engagement portion 533 increases. In this case, the first mover 5379 retracts relative to the first stator 5377 to allow the first angle α to decrease and rematch the reduced gap 40. In this way, the angle portion 535 may still be filled into the gap 40 between the scraping roller 30 and the coating roller 10 to prevent the slurry from overflowing.

In the above technical solution, the blocker 53 uses the first adjustment portion 537 to adjust the first angle α, which is simple in structure and easy to implement, and can ensure that when the size of the gap 40 between the scraping roller 30 and the coating roller 10 changes, the angle portion 535 can still extend into the gap 40 to fill the gap 40 and prevent the slurry from spreading outwards. Further, when the first adjustment portion 537 adopts the first the multi-stage elastic retractable structure, the first angle is adjusted by using the elastic portion, and the first angle is held to match the gap using the limit portion to 40. In this way, a relatively simple structure can be used to adjust the first angle α. When the first adjustment portion 537 adopts the multi-stage rigid retractable structure, the first angle α may be adjusted by using the extension and the retraction of the mover 5379 relative to the stator 5377, and the first angle α is held to be matched with the gap 40. In this way, a relatively simple structure can be used to adjust the first angle α.

Referring to FIGS. 2 and 4, or FIGS. 3 and 4, in some embodiments, the support 51 has an open structure with one end closed and another end opened, formed by two plate-like structures connected at one end and away from each other at another end. In one embodiment, the support 51 (open structure) may include a first support portion 511 and a second support portion 513. In some examples, the first support portion 511 and the second support portion 513 are both plate-shaped. In other examples, the first support portion 511 and the second support portion 513 both have an elongated shape. In other embodiments, the first support portion 511 and the second support portion 513 may also have other shapes, which will not be enumerated herein. The first support portion 511 is connected to the engagement portion 533 at a first end 5111 of the first support portion 511, and the second support portion 513 is connected to the cooperation portion 531 at a first end 5131 of the second support portion 513. A second end 5113 of the first support portion 511 and a second end 5113 of the second support portion 513 are connected to form a second angle β, and the second angle β is adjustable to change the first angle α.

In the above technical solution, the first support portion 511 is connected to the engagement portion 533, and the second support portion 513 is connected to the cooperation portion 531. The first angle α may be changed by adjusting second angle β between the first support portion 511 and the second support portion 513 connected to the first support portion 511, which can also ensure that when the size of the gap 40 between the scraping roller 30 and the coating roller 10 changes, the angle portion 535 may extend into the gap 40 to fill the gap 40 and prevent the slurry from spreading outwards.

Further, referring to FIGS. 3 and 4, in some embodiments, the support 51 further includes a second adjustment portion 515 with a multi-stage retractable structure. Two opposite ends of the second adjustment portion 515 are connected to the first support portion 511 and the second support portion 513, respectively. The second adjustment portion 515 is configured, by means of multi-stage extension and retraction, adjust the second angle β according to a size of the gap 40, thereby enabling the first angle α to be changed, such that the first angle α matches the gap 40.

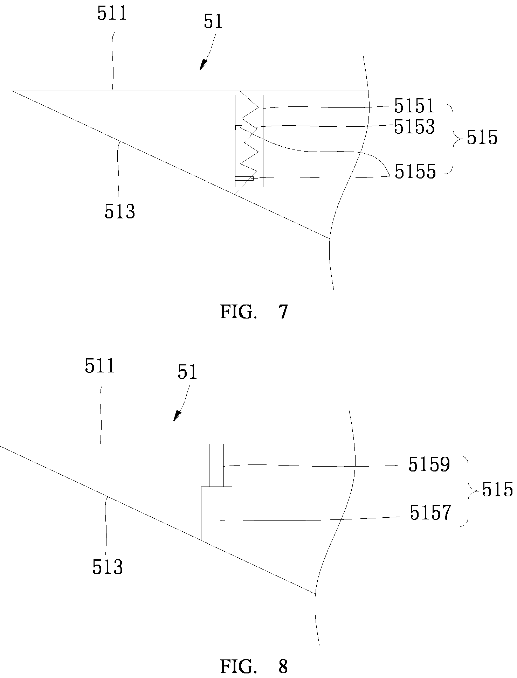

Referring to FIG. 7, in some embodiments, the second adjustment portion 515 may have a multi-stage retractable structure that is elastically deformable (hereinafter referred to as a multi-stage elastic retractable structure), the second adjustment portion 515 has an end connected to the first support portion 511 and another end connected to the second support portion 513. In one embodiment, the second adjustment portion 515 (the multi-stage elastic retractable structure) includes a second housing 5151, a second elastic portion 5153 penetrating the second housing 5151, and at least two second limit portions 5155 mounted at the second housing 5151 in an extendable and retractable manner. Two opposite ends of the second elastic portion 5153 are connected to the first support portion 511 and the second support portion 513, respectively, to apply a stretching force or a tensioning force to the first support portion 511 and/or the second support portion 513, thereby stretching or tensioning the first support portion 511 and/or the second support portion 513. The at least two second limit portions 5155 are sequentially arranged in a length direction of the second elastic portion 5153 and configured to selectively extend to a deformation path of the second elastic portion 5153 relative to the second housing 5151 or retract to be located outside the deformation path of the second elastic portion 5153 relative to the second housing 5151, such that when a magnitude of the stretching force or a magnitude of the tensioning force of the second elastic portion 5153 changes, the second angle is adjusted, which in turn adjusts the first angle until the first angle matches the size of the gap 40. That is, the angle portion 535 can constantly be filled into the gap 40 between the scraping roller 30 and the coating roller 10 to prevent the slurry from overflowing. That is, the second surface 5315 of the cooperation portion 531 constantly maintains a good fit with the peripheral surface of the coating roller 10, and the second surface 5335 of the engagement portion 533 constantly maintains a good fit with the peripheral surface of the scraping roller 30. When the external force applied to the cooperation portion 531 and/or the engagement portion 533 changes, the change in the external force is transmitted to the second adjustment portion 515 through the first support portion 511 and the second support portion 513. In this case, the stretching force or tensioning force of the second elastic portion 5153 of the second adjustment portion 515 changes, and the second limit portion 5155 initially cooperating with the second elastic portion 5153 retracts due to the external force and is located outside the deformation path of the second elastic portion 5153. The second elastic portion 5153 deforms to adjust the second angle β, which in turn adjusts the first angle α such that the first angle α matches the size of the gap 40. At the same time, another second limit portion 5155 of the second adjustment portion 515 may automatically extend to the deformation path of the second elastic portion 5153 relative to the second housing 5151 to hold the first support portion 511 and the second support portion 513 at a position where the first angle α matches the size of the gap 40. For example, when the gap 40 between the scraping roller 30 and the coating roller 10 increases, the external force applied to the cooperation portion 531 and/or the engagement portion 533 decreases. In this case, the stretching force of the second adjustment portion 515 increases or the tensioning force of the second adjustment portion 515 decreases, and the second limit portion 5155 initially cooperating with the second elastic portion 5153 retracts due to the external force and is located outside the deformation path of the second elastic portion 5153. The second elastic portion 5153 of the multi-stage elastic retractable structure extends, and the second angle β of the support 51 increases. Therefore, the first angle α between the cooperation portion 531 and the engagement portion 533 increases and rematches the increased gap 40. In this way, the angle portion 535 can still be filled into the gap 40 between the scraping roller 30 and the coating roller 10 to prevent the slurry from overflowing. For another example, when the gap 40 between the scraping roller 30 and the coating roller 10 decreases, the external force applied to the cooperation portion 531 and/or the engagement portion 533 increases. In this case, the stretching force of the second adjustment portion 515 decreases or the tensioning force of the second adjustment portion 515 increases, and the second limit portion 5155 initially cooperating with the second elastic portion 5153 retracts due to the external force and is located outside the deformation path of the second elastic portion 5153. The second elastic portion 5153 of the multi-stage elastic retractable structure retracts, and the second angle β of the support 51 decreases. Therefore, the first angle α also decreases and rematches with the decreased gap 40. In this way, the angle portion 535 can still be filled into the gap 40 between the scraping roller 30 and the coating roller 10 to prevent the slurry from overflowing.

Referring to FIG. 8, in some other embodiments, the second adjustment portion 515 may be of a multi-stage retractable structure without elastic deformation (hereinafter referred to as a multi-stage rigid retractable structure), such as a multi-stage cylinder retractable structure, a multi-stage hydraulic cylinder retractable structure, or a multi-stage linear retractable motor. The second adjustment portion 515 has an end connected to the first support portion 511 and another end connected to the second support portion 513. The second adjustment portion 515 (the multi-stage rigid retractable structure) includes a second stator 5157 and a second mover 5159. One of the second stator 5157 and the second mover 5159 is connected to the first support portion 511, and another one of the second stator 5157 and the second mover 5159 is connected to the second support portion 513. The second mover 5159 is retractable relative to the second stator 5157 to stretch the support 51. When the external force applied to the cooperation portion 531 and/or the engagement portion 533 changes, the second adjustment portion 515 can automatically adjust a degree of the stretching between the second adjustment portion 515 and the support 51 in response to the change in the external force, to adjust the second angle β of the support 51 and hold the first support portion 511 and the second support portion 513 at a position where the first angle constantly matches the size of the gap 40. For example, when the gap 40 between the scraping roller 30 and the coating roller 10 increases, the external force applied to the cooperation portion 531 and/or the engagement portion 533 decreases, and the second mover 5159 extends relative to the second stator 5157 to increase the second angle β of the support 51. Therefore, the first angle α between the cooperation portion 531 and the engagement portion 533 also increases and rematches the increased gap 40, and the angle portion 535 can still be filled into the gap 40 between the scraping roller 30 and the coating roller 10 to prevent the slurry from overflowing. For another example, when the gap 40 between the scraping roller 30 and the coating roller 10 decreases, the external force applied to the cooperation portion 531 and/or the engagement portion 533 increases. In this case, the second mover 5159 retracts relative to the second stator 5157 to reduce the second angle β of the support 51. Therefore, the first angle α between the cooperation portion 531 and the engagement portion 533 also decreases and rematches the decreased gap 40. In this way, the angle portion 535 can still be filled into the gap 40 between the scraping roller 30 and the coating roller 10 to prevent the slurry from overflowing.

In the above technical solution, the support 51 adjusts the second angle β through using the second adjustment portion 515, thereby adjusting the first angle α between the cooperation portion 531 and the engagement portion 533. Therefore, it is ensured that when the size of the gap 40 between the scraping roller 30 and the coating roller 10 changes, the angle portion 535 may still extend into the gap 40 to fill the gap 40 and prevent the slurry from spreading outwards. Further, when the second adjustment portion 515 adopts a multi-stage elastic retractable structure, the second angle β may be adjusted by using the second elastic portion 5153, thereby adjusting the first angle α, such that the first angle α matches the size of the gap 40. Then, the first angle α is held to be matched with the gap 40 by the second limit portion 5155. In this way, a relatively simple structure can be used to adjust the first angle α. When the second adjustment portion 515 adopts a multi-stage rigid retractable structure, he second angle β may be adjusted by using the extension and the retraction of the second mover 5159 relative to the second stator 5157, thereby adjusting the first angle α, such that the first angle α matches the size of the gap 40 and hold the first angle α to match the gap 40. In this way, a relatively simple structure can be used to adjust the first angle α.

Referring to FIGS. 2 and 4, or FIGS. 3 and 4, further, in some embodiments, the blocker 53 may also include a connection portion 539. The connection portion 539 extends from the second surface 5317 of the cooperation portion 531, and the connection portion 539 and the engagement portion 533 are located at a side of the cooperation portion 531 where the second surface 5317 of the cooperation portion 531 is located. The connection portion 539 is configured to connect to an external structure. The cooperation portion 531, the engagement portion 533, and the connection portion 539 together form an engagement groove 530, and the support 51 is arranged in the engagement groove 530. The connection portion 539 may have a block-like structure, an elongated structure, a rod-like structure, or a plate-like structure. The connection portion 539 is connected to the cooperation portion 531 at an end of the connection portion 539, and another end of the connection portion 539 is a free end. The arrangement of the connection portion 539 can facilitate the fixed mounting of the entire blocker 53. In addition, the engagement groove 530 formed by the cooperation portion 531, the engagement portion 533, and the connection portion 539 can provide a satisfactory mounting of the support 51.

Referring to FIGS. 2 and 4, or FIGS. 3 and 4, further, in some embodiments, the coating device 100 may further include a loader 55 connected to the connection portion 539.

In one embodiment, the loader 55 is fixed to a support (not shown) and is located above the slurry tank of the coating device 100, and the connection portion 539 is mounted at the loader 55. That is, the arrangement of the loader 55 is convenient for the mounting of the blocking assembly 50. As a result, the mounting of the blocking assembly 50 is simple and convenient. At the same time, the loader 55 can also prevent the slurry from overflowing. In addition, the loader 55 may be a block-like structure, an elongated structure, a rod-like structure, or a plate-like structure. Preferably, the loader 55 is structurally adapted to the connection portion 539. For example, when the connection portion 539 has a block-like structure, the loader 55 also has a block structure; when the connection portion 539 has an elongated structure, the loader 55 also has an elongated structure; and when the connection portion 539 has a plate-like structure, the loader 55 also has a plate-like structure.

Referring to FIGS. 2 and 4, or FIGS. 3 and 4, further, in some embodiments, the coating device 100 may further include a clamping plate 57 configured to fixedly clamp the support 51 and the connection portion 539 to the loader 55.

In one embodiment, the clamping plate 57 has a roughly V-shaped structure, and the clamping plate 57 includes a first clamping arm 571, a second clamping arm 573, and a connection arm 575 for connecting the first clamping arm 571 and the second clamping arm 573. The first clamping arm 571 is clamped to the first support portion 511 of the support 51, and the second clamping arm 573 is clamped to the loader 55. The arrangement of the clamping plate 57 can firmly clamp the support 51 and the loader 55 without a movement. Therefore, the angle portion 535 of the blocker 53 can cooperate well with the coating roller 10 and the scraping roller 30. Thus, the effect of blocking the overflowing of the slurry is improved.

Referring to FIG. 1, the coating device 100 may further include a first support frame 61, a first connector 71, a second support frame 63, and a second connector 73. The scraping roller 30 is rotatably connected to the first support frame 61 through the first connector 71. The coating roller 10 is rotatably connected to the second support frame 63 through the second connector 73. In some embodiments, a positional relationship between the first support frame 61 and the second support frame 63 is an up-and-down arrangement, and a positional relationship between the first connector 71 and the second connector 73 is also an up-and-down arrangement. Each of the first support frame 61 and the second support frame 63 has a frame structure, and each of the first connector 71 and the second connector 73 is a connection shaft. Two ends of the scraping roller 30 are rotatably connected to two opposite ends of the first support frame 61 through the connection shafts, respectively, and two ends of the coating roller 10 are rotatably connected to two opposite ends of the second support frame 63 through the connection shafts, respectively. In this way, the scraping roller 30 is rotatable around the connecting shaft relative to the first support frame 61, and the coating roller 10 is also rotatable around the connecting shaft relative to the second support frame 63. In the embodiments of the present disclosure, the first support frame 61 and the first connector 71 jointly realize the mounting and the fixing of the scraping roller 30, and the second support frame 63 and the second connector 73 jointly realize the mounting and the fixing of the coating roller 10.

At last, it should be noted that, the above embodiments are only used to illustrate, rather than to limit, the technical solutions of the present disclosure. Although the present disclosure has been described in detail with reference to the above embodiments, those skilled in the art should understand that modifications may be made to the technical solutions described in the above embodiments, or equivalent replacements may be made to some or all of the technical features of the technical solutions described in the above embodiments. However, these modifications or replacements do not cause the essence of corresponding technical solutions to deviate from the scope of the technical solutions of the embodiments of the present disclosure, and shall be included in the scope of the claims and the specification of the present disclosure. In particular, the technical features mentioned in the various embodiments can be combined in any way as long as there are no structural conflicts. The present disclosure is not limited to the specific embodiments disclosed herein, but includes all technical solutions falling within the scope implementations the claims.

## Claims

1. A coating device, comprising:
a coating roller;
a scraping roller, wherein the scraping roller and the coating roller are arranged side by side, and a gap is provided between the scraping roller and the coating roller to allow a slurry to pass through; and
a blocking assembly arranged at an outer side of the coating roller and an outer side of the scraping roller, wherein the blocking assembly comprises a support and a blocker mounted at the support, wherein the blocker comprises a cooperation portion cooperating with the coating roller and an engagement portion cooperating with the scraping roller, wherein:
a first end of the cooperation portion and a first end of the engagement portion are connected with each other and form an angle portion, wherein the angle portion extends into the gap; and
a second end of the cooperation portion is located away from a second end of the engagement portion to form a first angle between the cooperation portion and the engagement portion, wherein the first angle is adjustable.

2. The coating device according to claim 1, wherein the blocker further comprises a first adjustment portion, wherein two opposite ends of the first adjustment portion are connected to the cooperation portion and the engagement portion, respectively, and the first adjustment portion is configured to, by means of multi-stage extension and retraction, adjust the first angle according to a size of the gap.

3. The coating device according to claim 2, wherein the first adjustment portion comprises:
a housing;
an elastic portion penetrating the housing; and
at least two limit portions mounted at the housing in an extendable and retractable manner, wherein the at least two limit portions are sequentially arranged in a length direction of the elastic portion, and configured to selectively extend to a deformation path of the elastic portion relative to the housing or retract to be located outside the deformation path of the elastic portion relative to the housing, to enable the first angle to match the gap.

4. The coating device according to claim 2, wherein the first adjustment portion comprises a stator and a mover, wherein the mover is extendable and retractable relative to the stator to adjust the first angle to match the gap.

5. The coating device according to claim 1, wherein the support comprises:
a first support portion connected to the engagement portion at a first end of the first support portion; and
a second support portion connected to the cooperation portion at a first end of the second support portion, wherein a second end of the first support portion and a second end of the second support portion are connected with each other to form a second angle, wherein the second angle is adjustable to change the first angle between the cooperation portion and the engagement portion.

6. The coating device according to claim 5, wherein the support further comprises a second adjustment portion, wherein two opposite ends of the second adjustment portion are connected to the first support portion and the second support portion, respectively, and the second adjustment portion is configured to, by means of multi-stage extension and retraction, adjust the second angle according to a size of the gap to change the first angle between the cooperation portion and the engagement portion.

7. The coating device according to claim 6, wherein the second adjustment portion comprises:
a housing;
an elastic portion penetrating the housing; and
at least two limit portions mounted at the housing in an extendable and retractable manner, wherein the at least two limit portions are sequentially arranged in a length direction of the elastic portion, and configured to selectively extend to a deformation path of the elastic portion relative to the housing or retract to be located outside the deformation path of the elastic portion relative to the housing, to enable the first angle to match the gap.

8. The coating device according to claim 6, wherein the second adjustment portion comprises a stator and a mover, wherein the mover is extendable and retractable relative to the stator to adjust the first angle to match the gap.

9. The coating device according to claim 1, wherein:
the cooperation portion has a first surface and a second surface opposite to the first surface of the cooperation portion, wherein the first surface of the cooperation portion is an arc surface in contact with and in cooperation with the coating roller; and
the engagement portion has a first surface and a second surface opposite to the first surface of the engagement portion, wherein the first surface of the engagement portion is an arc surface in contact with and in cooperation with the scraping roller.

10. The coating device according to claim 9, wherein:
the blocker further comprises a connection portion extending from the second surface of the cooperation portion;
the connection portion and the engagement portion are located at a side of the cooperation portion where the second surface of the cooperation portion is located;
the connection portion is configured to connect to an external structure;
the cooperation portion, the engagement portion, and the connection portion together form an engagement groove; and
the support is disposed in the engagement groove.

11. The coating device according to claim 10, wherein the connection portion has a block-like structure, an elongated structure, a rod-like structure, or a plate-like structure, wherein the connection portion is connected to the cooperation portion at an end of the connection portion, and another end of the connection portion is a free end.

12. The coating device according to claim 10, further comprising a loader connected to the connection portion.

13. The coating device according to claim 12, further comprising a clamping plate configured to fixedly clamp the support and the connection portion to the loader.

14. The coating device according to claim 1, wherein the blocker is an ethylene-vinyl acetate copolymer, EVA, foam board, an acrylic board, a plastic board, or a metallic board.

15. The coating device according to claim 1, further comprising:
a first support frame and a first connector, wherein the scraping roller is rotatably connected to the first support frame through the first connector; and
a second support frame and a second connector, wherein the coating roller is rotatably connected to the second support frame through the second connector.
